# EUROPEAN PATENT SPECIFICATION

(11) **EP 4 219 837 B1**
(45) Date of publication and mention of the grant of the patent: **10.12.2025**
(21) Application number: 23152147.7
(22) Date of filing: 18.01.2023
(51) Int. Cl.: E02B 17/02, B23D 57/00, E02B 17/04, E02B 17/00

(54) **METHOD FOR TILTING CONSTRUCTION AND TILTING STRUCTURE**
VERFAHREN ZUM KIPPEN EINER KONSTRUKTION UND KIPPSTRUKTUR
PROCÉDÉ DE CONSTRUCTION INCLINABLE ET STRUCTURE INCLINABLE

(30) Priority: 31.01.2022 JP 2022012955
(43) Date of publication of application: 02.08.2023
(73) Proprietor: Mitsubishi Heavy Industries, Ltd., Tokyo 100-8332 (JP)
(72) Inventor: TSUBOTA, Shuho, Tokyo, 100-8332 (JP); KANEMASU, Masayuki, Tokyo, 100-8332 (JP); SUZUKI, Akihito, Tokyo, 100-8332 (JP); NISHIGAKI, Makoto, Tokyo, 100-8332 (JP); INOUE, Tomoaki, Tokyo, 100-8332 (JP); KONO, Akira, Tokyo, 100-8332 (JP); OKUDA, Takehisa, Tokyo, 100-8332 (JP)
(74) Representative: Studio Torta S.p.A.

(56) References cited:
- JP-B2- 4 828 314
- US-A1- 2015 167 646
- US-B1- 6 269 761
- US-B1- 6 550 411

## Description

### BACKGROUND

### 1. TECHNICAL FIELD

The present disclosure relates to a method for tilting a construction and a tilting structure.

### 2. DESCRIPTION OF RELATED ART

When demolishing a construction on land extending perpendicularly, such as a tower type construction, for example, a method of cutting, on the base side, collapsing, and then demolishing the construction is considered as an inexpensive demolishing method that avoids high-place work as much as possible (for example, Japanese Patent No. 4828314). Cutting of a construction is performed by using explosion or other mechanical cutting, for example.

Japanese Patent No. 4828314 is an example of the related art. Further documents are: US6550411, US6269761 and US20150167646.

When such a demolishing method is applied to a bottom-mounted aquatic construction, however, (1) waves rise on the water surface when the construction falls and this may be hazardous to vessels or the like nearby, (2) contaminants (debris, dust, oil, or the like of the construction) attached to the construction when the construction is falling and after the construction falls or contaminants included in the construction may be scattered or flow out in water, and this may cause contamination, and (3) the fallen construction may sink into water and may no longer be collected.

Further, to safely tilt a construction when demolishing a tower type construction without being limited to an aquatic construction, it is preferable to control at least one of the tilting speed and the tilting direction of the construction.

### BRIEF SUMMARY

The present disclosure has been made in view of such circumstances and intends to provide a method for tilting a construction and a tilting structure that can control at least one of the tilting speed and the tilting direction of the construction.

To solve the above problem, the method for tilting a construction and the tilting structure of the present disclosure employ solutions that follow from the appended independent claims, which define the invention. Preferred embodiments of the invention follow from the dependent claims.

A method for tilting a construction according to one aspect of the present disclosure is a method for tilting a construction to tilt a bottom-mounted construction extending upward from a ground, and the method includes: an installation step of mounting a resistive member to the construction, the resistive member being subjected to fluid force from a fluid surrounding the construction; and a tilting step of tilting the construction to which the resistive member is mounted.

Further, a tilting structure according to one aspect of the present disclosure includes: a bottom-mounted construction extending upward from a ground; and a resistive member mounted to the construction and subjected to fluid force from a fluid surrounding the construction.

According to the present disclosure, it is possible to control at least one of the tilting speed and the tilting direction of a construction.

### BRIEF DESCRIPTION OF THE SEVERAL VIEWS OF THE DRAWINGS

Fig. 1 is a diagram illustrating a view before and after removal of an aquatic construction.
Fig. 2 is a front view of a tilting structure according to a first embodiment of the present disclosure.
Fig. 3 is a side view of the tilting structure according to the first embodiment of the present disclosure.
Fig. 4 is a front view of the tilting structure according to the first embodiment of the present disclosure.
Fig. 5 is a side view of the tilting structure according to the first embodiment of the present disclosure.
Fig. 6 is a front view of a tilting structure according to another example of the first embodiment of the present disclosure.
Fig. 7 is a side view of the tilting structure according to another example of the first embodiment of the present disclosure.
Fig. 8 is a diagram illustrating a method of cutting a structure.
Fig. 9 is a diagram illustrating the method of cutting the structure.
Fig. 10 is a diagram illustrating the method of cutting the structure.
Fig. 11 is a diagram illustrating the method of cutting the structure.
Fig. 12 is a front view of a tilting structure according to a modified example of the first embodiment of the present disclosure.
Fig. 13 is a front view of a tilting structure according to a second embodiment of the present disclosure.
Fig. 14 is a front view of the tilting structure according to the second embodiment of the present disclosure.
Fig. 15 is a front view of a tilting structure according to a third embodiment of the present disclosure.
Fig. 16 is a front view of the tilting structure according to the third embodiment of the present disclosure.
Fig. 17 is a front view of the tilting structure according to the third embodiment of the present disclosure.
Fig. 18 is a front view of a tilting structure according to a modified example of the third embodiment of the present disclosure.

### DETAILED DESCRIPTION

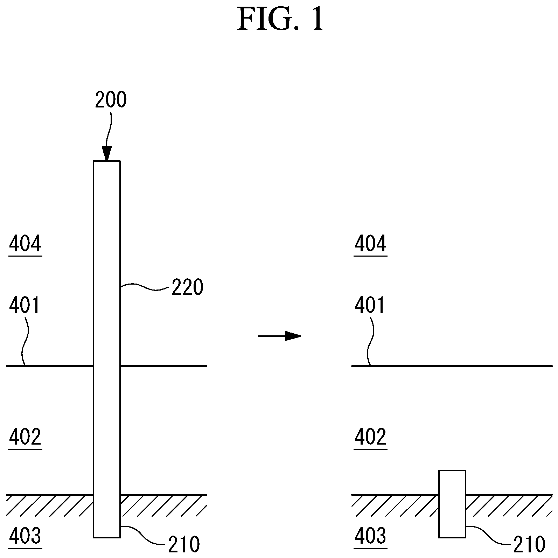

As illustrated in Fig. 1, the tilting method and the tilting structure according to each embodiment of the present disclosure are a method and a structure used when a construction 200 is demolished.

Note that "demolish" as used herein does not mean an operation to dismantle the construction 200 itself but means an operation to disconnect the construction 200 from a ground 401 and put the disconnected construction 200 to be ready to be moved from the installation place.

Further, "ground 401" is a term including not only land but also a bottom of water such as a sea bed or a lake bed. In each embodiment described below, when the type of the ground 401 is not particularly referred to, the ground 401 can include land and a bottom of water.

The construction 200 is a bottom-mounted construction extending perpendicularly upward from the ground 401 (that is, having a longitudinal direction in the perpendicular direction) in a state of being installed on the ground 401.

Examples of the construction 200 may be a weather observation tower, a leg structure of an offshore facility, a lighthouse, a transmission line tower, a wind turbine for power generation, or the like.

The construction 200 has a foundation 210 and a construction body 220.

Note that the boundary between the foundation 210 and the construction body 220 is not required to be a distinct separation in the construction 200.

The foundation 210 extends perpendicularly, and the lower part thereof has been driven in the ground 401.

Besides the monopile type as depicted, a jacket type, a tri-pot type, a tri-pile type, or the like may be employed for the foundation 210, and the specific form of the construction is not limited as long as it is a bottom-mounted type.

The construction body 220 is provided on the top of the foundation 210 in the perpendicular direction.

When the ground 401 is a bottom of water, that is, when the construction 200 is an aquatic construction, a portion including the upper end of the construction body 220 appears above the water surface 403.

The construction body 220 is a portion that exerts the substantial function as the construction 200. Since the construction body 220 contains devices required for exerting the function thereof, the weight of the construction body 220 is often greater than the weight of the foundation 210.

The method for tilting the construction 200 and a tilting structure will be specifically described below with examples of a plurality of embodiments.

### First Embodiment

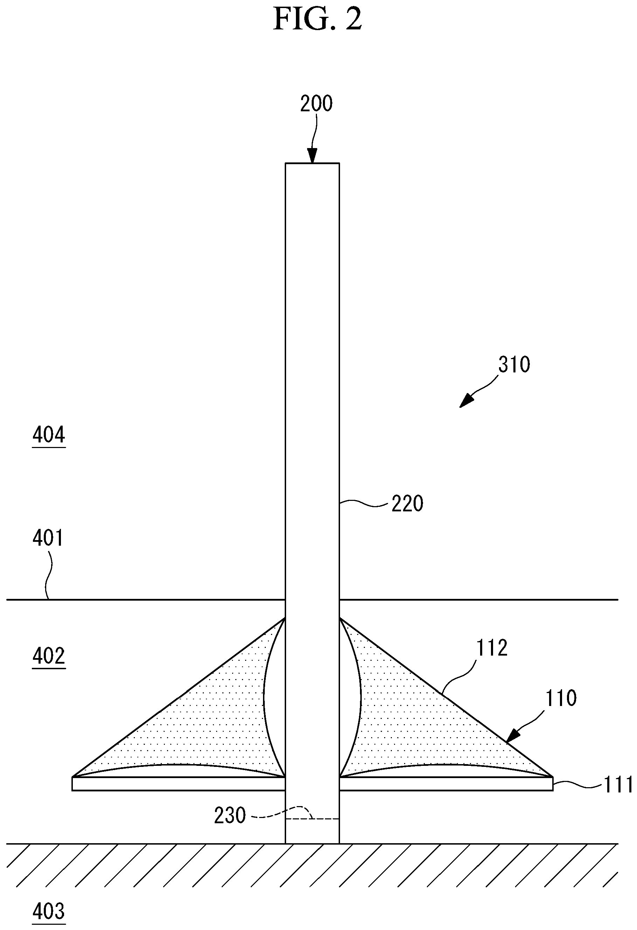

A method for tilting the construction and a tilting structure according to a first embodiment of the present disclosure will be described with reference to Fig. 2 to Fig. 12.

In the method for tilting a construction of the present embodiment, a tilting structure 310 formed such that a resistive member 110 is mounted to the construction 200 is tilted, and thereby the construction 200 is tilted.

As illustrated in Fig. 2 and Fig. 3, Fig. 4 and Fig. 5, and Fig. 6 and Fig. 7, the tilting structure 310 has the construction 200 and the resistive member 110.

The construction 200 is an aquatic construction erected from a bottom of water, for example, and the foundation 210 and the lower part of the construction body 220 are present in a surrounding water 402. Further, the upper part of the construction body 220 is present in a surrounding air 404.

Note that, for example, in a case of a land construction having the construction 200 erected from the land, the entire part of the foundation 210 and the construction body 220 are present in the surrounding air 404.

The resistive member 110 is a member mounted to the construction 200 (for example, the side surface of the construction body 220) and subjected to fluid force as a resistance from a fluid surrounding the construction 200.

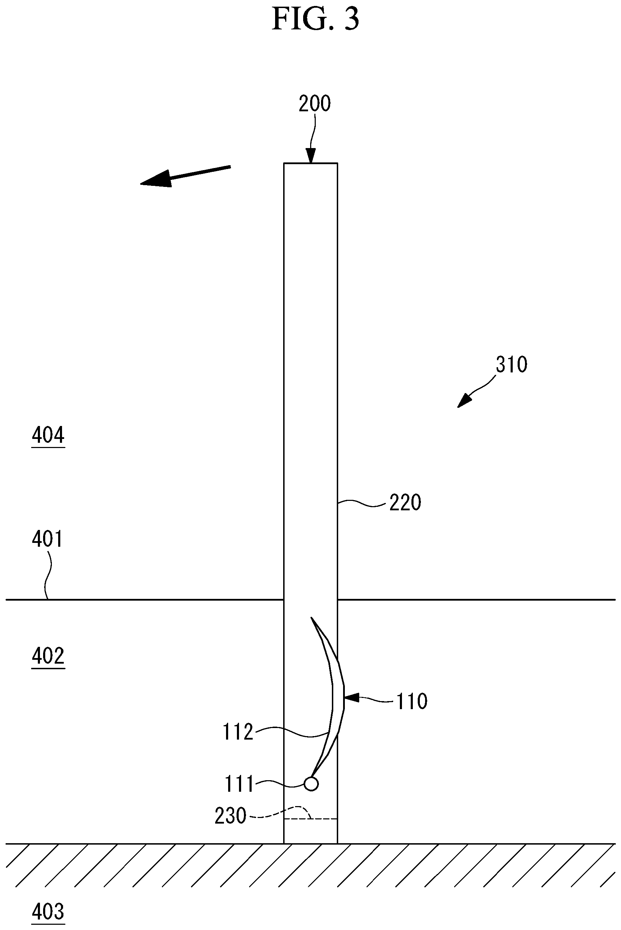

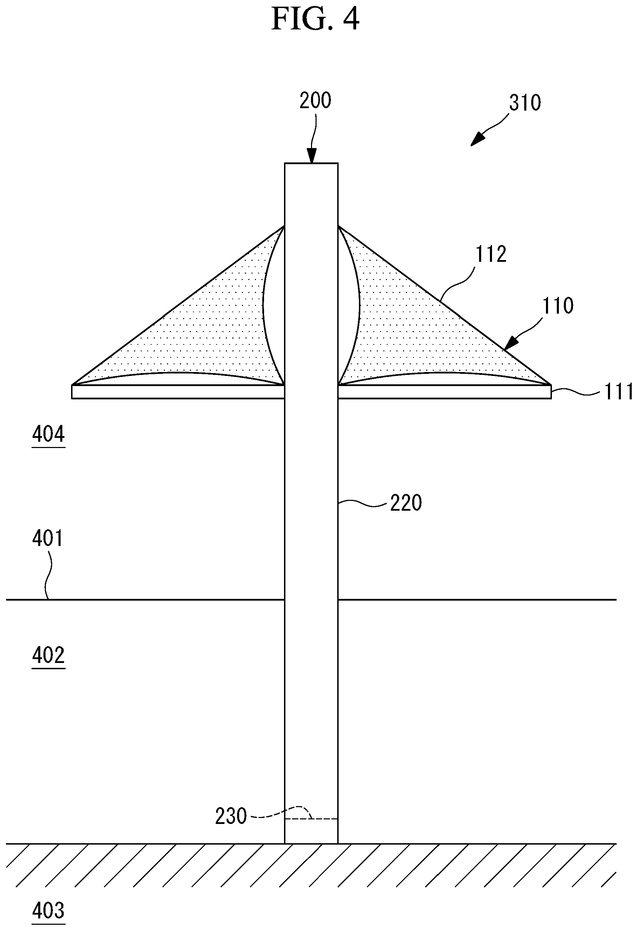

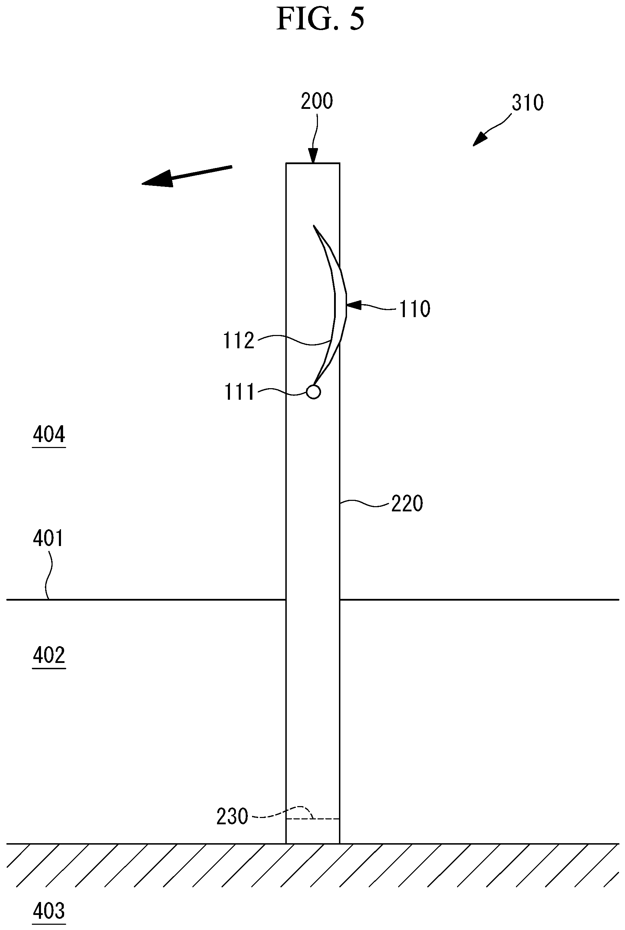

When the construction 200 is an aquatic construction, the fluid surrounding the construction 200 refers to water of the surrounding water 402 (see Fig. 2 and Fig. 3) or air of the surrounding air 404 (see Fig. 4 and Fig. 5) or both of the water and air. Further, when the construction 200 is a land construction, the fluid surrounding the construction 200 refers to air of the surrounding air 404.

The resistive member 110 is preferably a member that is lightweight but still has a large area of a portion subjected to resistance from a fluid or a member that can be efficiently subjected to resistance from a fluid and may be, for example, a sail, a board, a vane wheel, or the like.

### [Example when the resistive member is a sail]

The structure of a specific example when the resistive member 110 is a sail will be described below.

As illustrated in Fig. 2 and Fig. 3 and also Fig. 4 and Fig. 5, the resistive member 110 has poles 111 and sail bodies 112.

Each pole 111 is a long bar-like component mounted on the side surface of the construction body 220 and protruding in the horizontal direction.

For example, each pole 111 is mounted at each of positions that are symmetrical by 180 degrees with respect to the construction body 220. Accordingly, the construction 200 will be subjected to fluid force evenly in the horizontal direction (the lateral direction in Fig. 2) via the resistive member 110.

Each sail body 112 is a curtain-like component stretched between the pole 111 and the construction body 220. The sail body 112 is a component is subjected to the most part of resistance from a fluid in the resistive member 110.

The sail body 112 is stretched by being connected to three points of the tip of the pole 111, the base of the pole 111, and the side surface of the construction body 220, for example. In such a case, the sail body 112 is substantially triangular.

Note that the form of the pole 111 and the sail body 112 of the resistive member 110 is not limited to the specific example described above, and may be any form as long as the sail body 112 is stretched so as to be subjected to fluid force from water of the surrounding water 402 and/or air of the surrounding air 404.

### [Example when the resistive member is a vane wheel]

The structure of a specific example when the resistive member 110 is a vane wheel will be described below.

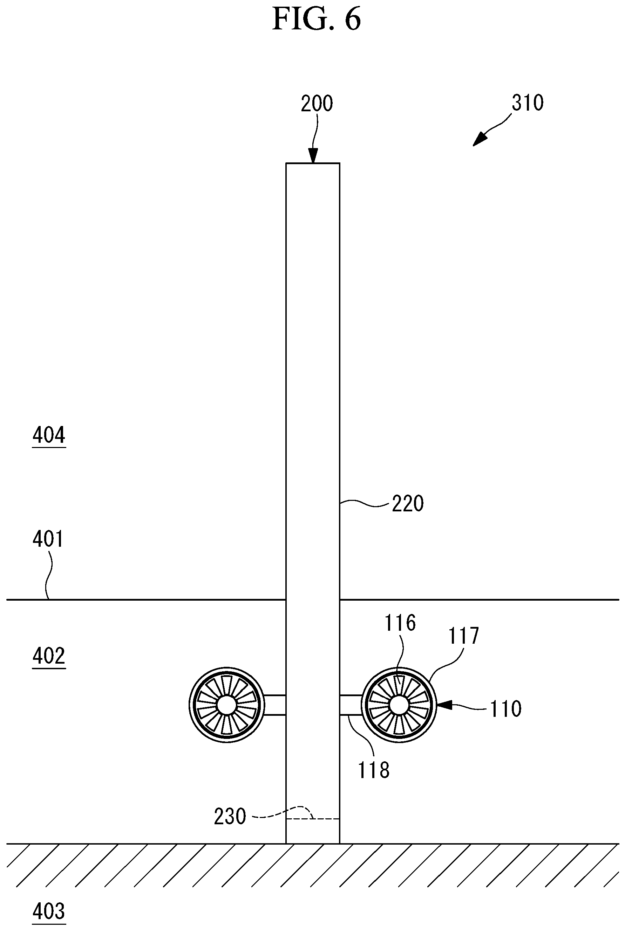

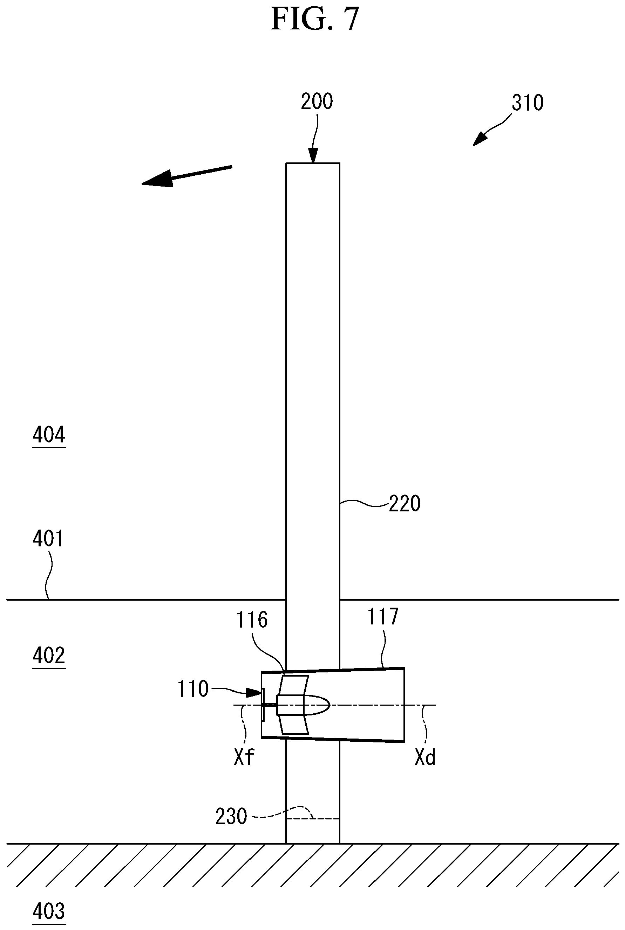

As illustrated in Fig. 6 and Fig. 7, the resistive member 110 has vane wheel bodies 116 and ducts 117.

Each vane wheel body 116 is housed inside each cylindrical duct 117 and is rotatable about the rotary axis Xf extending along the axis Xd of the duct 117.

The vane wheel body 116 may be driven by a drive unit (not illustrated) such as an electric motor or may be merely installed to be rotatable.

In the case of the former, it is possible to efficiently adjust the tilting speed by controlling the rotational rate of the vane wheel body 116. In the case of the latter, the vane wheel body 116 will be rotated by fluid force to generate resistance.

Each duct 117 housing the vane wheel body 116 is fixed and connected to the construction body 220 by a pole 118 and mounted at each of positions that are symmetrical by 180 degrees with respect to the construction body 220, for example.

In the resistive member 110 configured as described above, for example, the resistive member 110 may be configured to be rotatable and movable with respect to the construction 200 so as to be able to change the direction in which the sail or the vane wheel is subjected to fluid force from water of the surrounding water 402 and/or air of the surrounding air 404.

Further, the resistive member 110 may be mounted in advance during construction of the construction 200 or may be mounted immediately before demolition of the construction 200. Further, the pole 111 or the pole 118 may be mounted in advance during construction of the construction 200, and the sail body 112 or the vane wheel body 116 and the duct 117 may be mounted immediately before demolition.

In the tilting structure 310 configured as described above, the whole or a part of the construction 200 is cut at a cutting plane 230 set near the base of the construction 200 to tilt the tilting structure 310.

At this time, the resistive member 110 is subjected to fluid force as resistance from water of the surrounding water 402 and/or air of the surrounding air 404, and thereby the tilting speed of the tilting structure 310 is reduced.

Note that, when a sail is employed as the resistive member 110, it is possible to adjust the tilting speed by increasing or decreasing the area of the surface of the sail body 112 to be subjected to the resistance, for example.

Further, when a vane wheel is employed as the resistive member 110, it is possible to efficiently adjust the tilting speed by controlling the rotational rate of the vane wheel, for example.

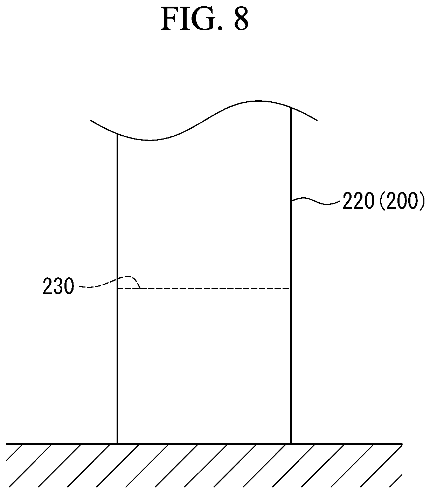

When cutting the construction 200, it is possible to adjust the tilting direction of the tilting structure 310 by undergoing the same steps as those for felling a tree, as illustrated in Fig. 8 to Fig. 11.

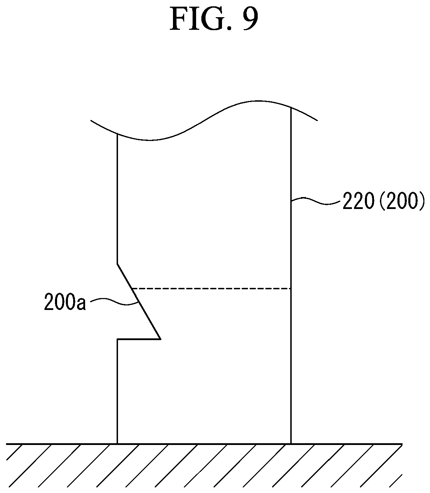

Specifically, first, as illustrated in Fig. 8 and Fig. 9, a notch 200a is formed in the side surface of the construction 200.

The notch 200a is formed in a direction intended to tilt the tilting structure 310.

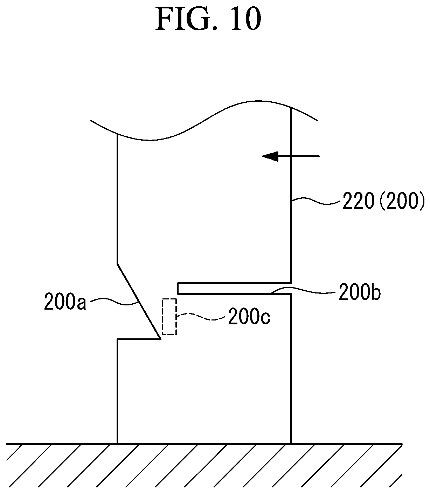

Next, as illustrated in Fig. 10, a backcut 200b is formed horizontally toward the notch 200a from the side surface of the construction 200 on the opposite side from the notch 200a. At this time, a hinge 200c serving as a fulcrum for tilting is left.

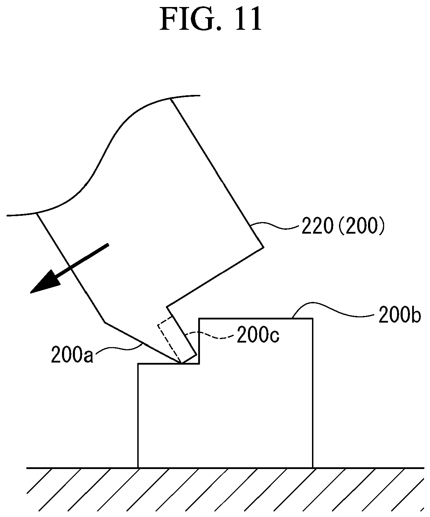

Finally, as illustrated in Fig. 10 and Fig. 11, a load serving as a trigger is applied so that the tilting structure 310 is tilted in a direction of closing the notch 200a. This makes it possible to tilt the tilting structure 310 in a desired direction.

Note that a tool to apply a load serving as a trigger may be a winch 130 (a wire 132) as an example that will be described in a third embodiment.

According to the present embodiment, the following advantageous effects are achieved.

Since the embodiment includes an installation step of mounting the resistive member 110 to the construction 200 and a tilting step of tilting the construction 200 to which the resistive member 110 is mounted (that is, the tilting structure 310), the tilting speed of the construction 200 can be reduced by fluid force that the resistive member 110 is subjected to when the construction 200 is tilted.

Accordingly, the construction 200 can be safely tilted. Further, the impact when the construction 200 collides with the water surface 403 or the surface of land can be reduced.

### [Modified Example]

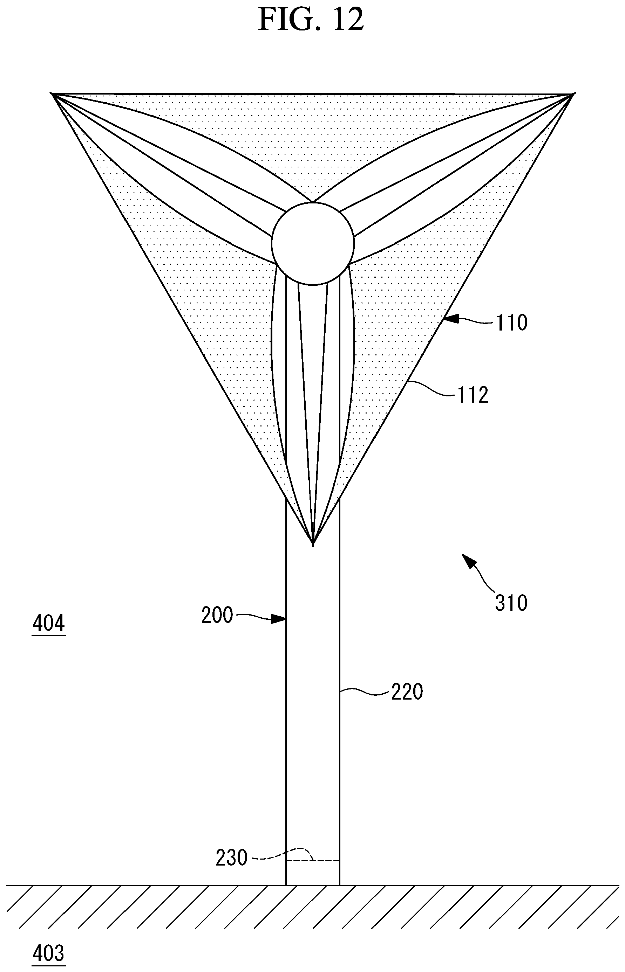

As illustrated in Fig. 12, when the construction 200 is a wind wheel, for example, sail bodies 112 may be stretched between the blades.

In such a case, the sail bodies 112 are stretched by being connected to three points, that is, the tip of a blade, the tip of an adjacent blade, and a hub, for example.

### [Second Embodiment]

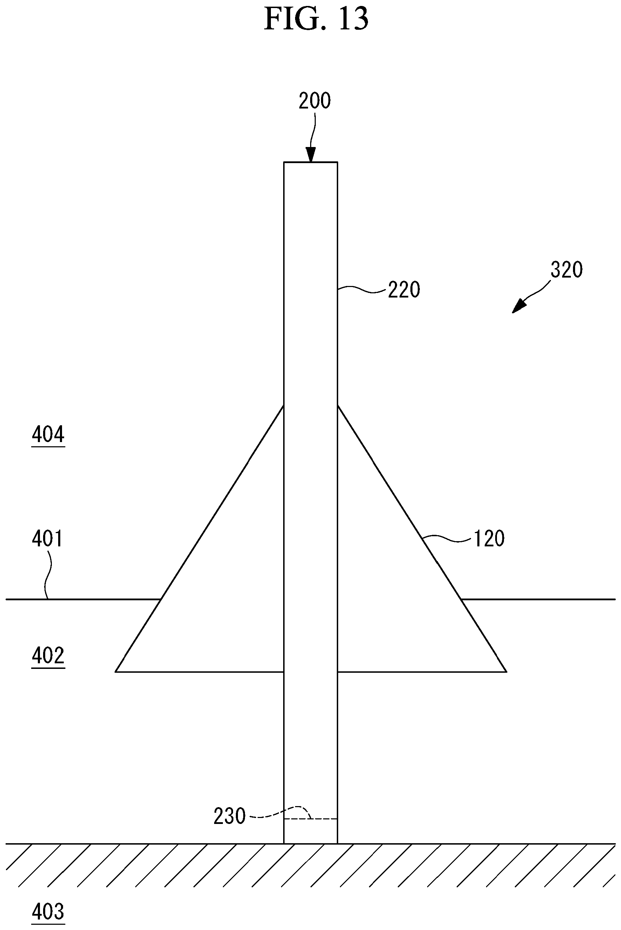

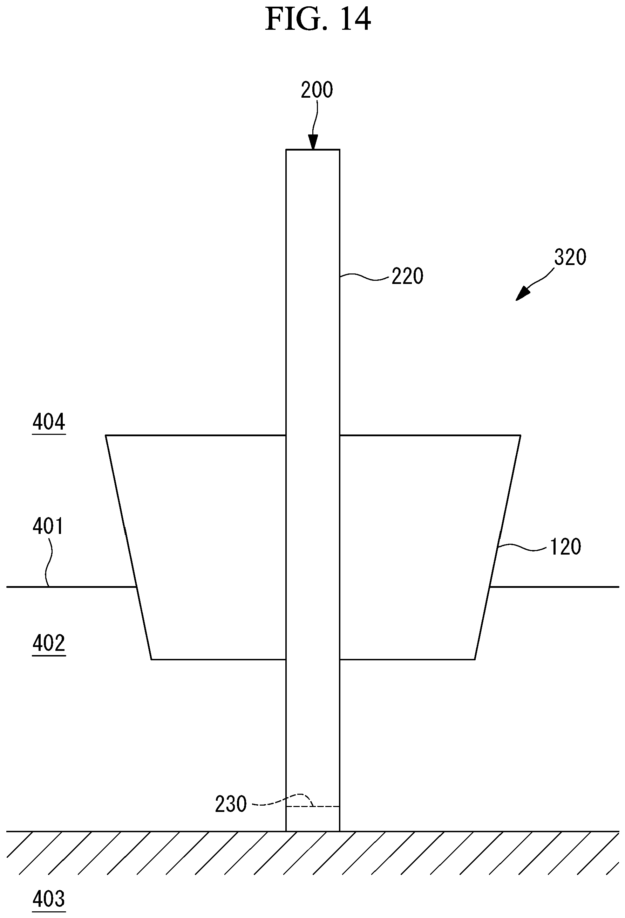

A method for tilting a construction and a tilting structure according to a second embodiment of the present disclosure will be described with reference to Fig. 13 and Fig. 14.

Note that a tilting structure 320 according to the present embodiment differs from the tilting structure 310 according to the first embodiment in that the tilting structure 320 does not have the resistive member 110 but has a floating member 120. Thus, the same configurations are labeled with the same reference, and the description thereof will be omitted.

The method for tilting a construction of the present embodiment tilts the tilting structure 320 formed such that the floating member 120 is mounted to the construction 200 and thereby tilts the construction 200.

As illustrated in Fig. 13 and Fig. 14, the tilting structure 320 has the construction 200 and the floating member 120.

Note that, in the case of the present embodiment, the construction 200 is an aquatic construction erected from a bottom of water such as a sea bed.

The floating member 120 is a member mounted to the construction 200 (for example, the side surface of the construction body 220) and subjected to floating force from water surrounding the construction 200.

The floating force obtained by the floating member 120 supports the construction 200 that is separate from the bottom of water. In other words, the specification of the floating member 120 is designed so that floating force that supports the construction 200 that is separate from the bottom of water is generated.

The floating member 120 may be provided over the whole circumference of the construction 200 or may be provided to a part of the circumference.

The floating member 120 is formed of a bag-like object made of a material such as nylon, rubber, or the like with a gas being filled inside the object, for example.

The floating member 120 may be mounted during construction of the construction 200 or may be mounted immediately before demolition of the construction 200.

In the tilting structure 320 configured as described above, the whole or a part of the construction 200 is cut at the cutting plane 230 set near the base of the construction 200.

At this time, the floating member 120 is subjected to floating force from the water, and this can prevent the tilting structure 310 from falling or being tilted due to its own weight. That is, even after the construction 200 is separated from the bottom of water, the construction 200 can be made self-supporting as a floating object.

Once the construction 200 is separated from the bottom of water, the tilting structure 320 is tilted by a predetermined tool. At this time, since the construction 200 relies on the floating member 120 to maintain the self-supporting state, the tilting speed of the construction 200 can be adjusted when the construction 200 is tilted.

Note that the tool for tilting the tilting structure 320 may be the winch 130 (the wire 132) as an example that will be described in the third embodiment.

According to the present embodiment, the following advantageous effects are achieved.

Since the embodiment includes an installation step of mounting the floating member 120 to the construction 200 and a tilting step of tilting the construction 200 to which the floating member 120 is mounted (that is, the tilting structure 320), the construction 200 can be made self-supporting as a floating object even after the construction 200 is separated from the bottom of water.

Accordingly, when the construction 200 is tilted, the tilting speed of the construction 200 can be adjusted, and the construction 200 can be safely tilted. Further, the impact when the construction 200 collides with the water surface 403 can be reduced.

### [Third Embodiment]

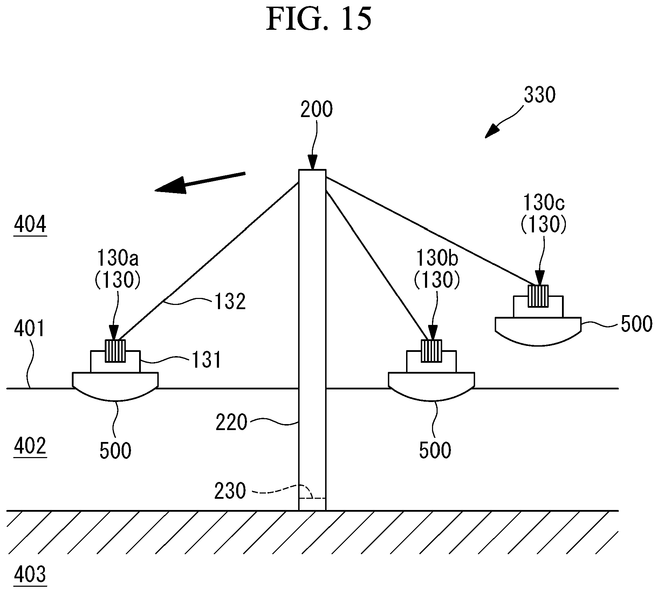

A method for tilting a construction and a tilting structure according to a third embodiment of the present disclosure will be described with reference to Fig. 15 to Fig. 17.

Note that a tilting structure 330 according to the present embodiment differs from the tilting structure 310 according to the first embodiment in that the tilting structure 330 does not have the resistive member 110 but has towing members 132. Thus, the same configurations are labeled with the same reference, and the description thereof will be omitted.

The method for tilting a construction of the present embodiment is a method for tilting the tilting structure 330 having the towing members 132 connected to the construction 200. In the method for tilting a construction of the present embodiment, the towing members 132 are towed, and thereby the construction 200 is tilted.

As illustrated in Fig. 15, the tilting structure 330 has the construction 200 and the towing members 132.

The towing members 132 are wires 132 of winches 130, for example.

Each of the winches 130 has a winch body 131 in addition to the wire 132.

The winch body 131 is a portion to unwind/wind up the wire 132 therefrom/thereon.

One end of the wire 132 is connected to the winch body 131, and the other end is connected to the upper part of the construction 200 (specifically, the upper part of the construction body 220).

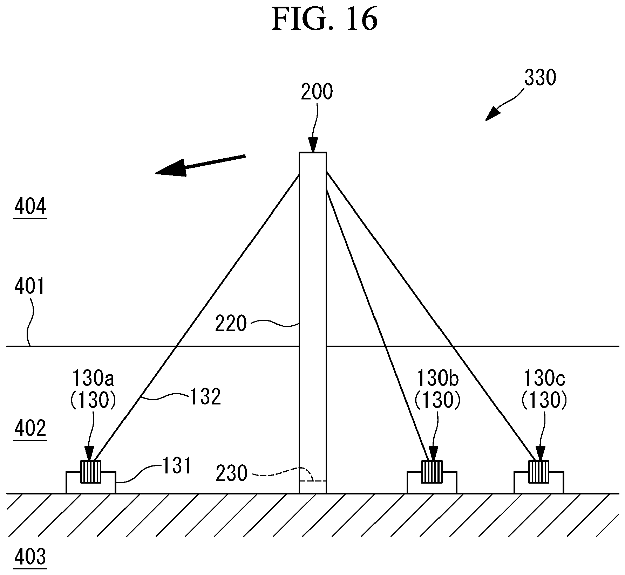

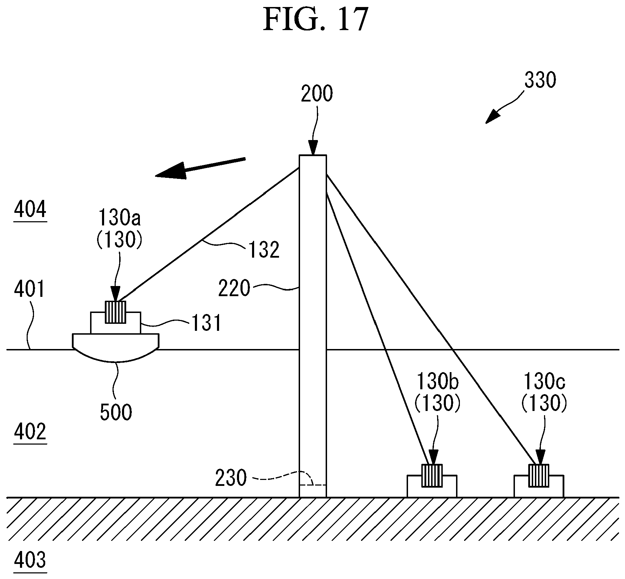

The winch 130 may be installed to a vessel 500 as illustrated in Fig. 15 or may be installed to the bottom of water as illustrated in Fig. 16. Further, as illustrated in Fig. 17, the winch 130 installed to the vessel 500 and the winch 130 installed to the bottom of water may be combined.

In any case, a plurality of winches 130 are installed. In the case of Fig. 15, three winches 130 (a winch 130a, a winch 130b, and a winch 130c) are installed.

It is preferable to mount the wire 132 of the winch 130 immediately before demolishing the construction 200.

In the tilting structure 330 configured as described above, the whole or a part of the construction 200 is cut at the cutting plane 230 set near the base of the construction 200 to tilt the tilting structure 330.

One winch 130 (for example, the winch 130a) out of the winches 130 tows the tilting structure 330 in a predetermined direction (a direction intended for tilting), and the remaining two winches 130 (for example, the winch 130b and the winch 130c) adjust the tilting speed by making a balance with the towing force of the winch 130a.

This makes it possible to adjust the tilting speed while tilting the tilting structure 330 in a desired direction.

Note that, when cutting the construction 200, the same steps as those for felling a tree as illustrated in Fig. 8 to Fig. 11 may be applied. In such a case, the towing force of the winch 130a serves as a trigger to tilt the tilting structure 330.

According to the present embodiment, the following advantageous effects are achieved.

Since the embodiment tilts the construction 200 by towing the upper part of the construction 200, it is possible to control the tilting speed or the tilting direction by the towing direction or the towing force.

### [Modified Example]

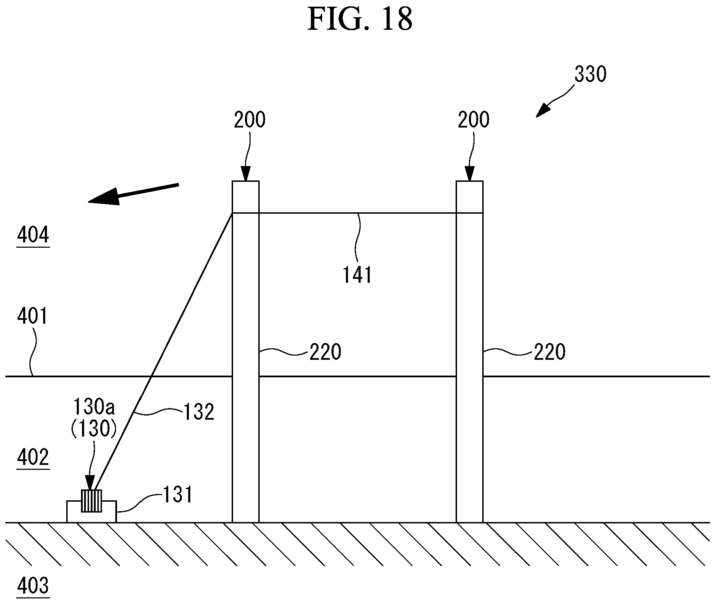

For example, instead of respective wires 132 of the winch 130b and the winch 130c illustrated in Fig. 15, a connection member 141 connecting one construction 200 (first construction 200) and another construction 200 (second construction 200) to each other may be installed, as illustrated in Fig. 18. The connection member 141 is a wire 141, for example.

Accordingly, by tilting the tilting structure 330 including the first construction 200, it is possible to tilt the tilting structure 330 including the second construction 200 in a chain reaction. That is, towing force of the wire 141 generated by tilting the tilting structure 330 can be utilized as a load serving as a trigger to tilt the other tilting structure 330.

Further, since one tilting structure 330 and another tilting structure 330 will support each other by the wire 141, a fall that would otherwise occur immediately after separated from the bottom of water can be prevented.

The method for tilting a construction and the tilting structure according to each embodiment as described above are understood as follows, for example.

That is, the method for tilting a construction (200) according to one aspect of the present disclosure is a method for tilting a construction to tilt a bottom-mounted construction extending upward from a ground (401), and the method includes: an installation step of mounting a resistive member (110) to the construction, the resistive member being subjected to fluid force from a fluid surrounding the construction; and a tilting step of tilting the construction to which the resistive member is mounted.

According to the method for tilting a construction according to the present aspect, since the method includes the installation step of mounting, to the construction, the resistive member subjected to fluid force from a fluid surrounding the construction and the tilting step of tilting the construction to which the resistive member is mounted, the tilting speed of the construction can be reduced by fluid force that the resistive member is subjected to when the construction is tilted. This makes it possible to safely tilt the construction. Further, the impact when the construction collides with the water surface or the surface of land can be reduced.

Note that the "ground" as used herein is a term including not only land but also a bottom of water such as a sea bed or a lake bed. That is, the construction targeted in the present aspect may be installed on land or may be installed to a bottom of water such as a sea bed.

The resistive member is preferably a member that is lightweight but still has a large area of a portion subjected to resistance from a fluid or a member that can be efficiently subjected to resistance from a fluid. Examples of the resistive member may be a sail, a board, a vane wheel, or the like.

Further, in the method for tilting the construction according to one aspect of the present disclosure, the construction is an aquatic construction extending from a bottom of water, and the resistive member is located in surrounding water and/or surrounding air.

According to the method for tilting the construction of the present aspect, the construction is an aquatic construction extending from a bottom of water, and the resistive member is located in the surrounding water and/or the surrounding air and thus can be subjected to the fluid force from water of the surrounding water and/or air of the surrounding air.

Further, the method for tilting the construction according to one aspect of the present disclosure is a method for tilting a construction to tilt a bottom-mounted construction extending upward from a bottom of water, and the method includes: an installation step of mounting a floating member (120) to the construction, the floating member being subjected to floating force from water; and a tilting step of tilting the construction to which the floating member is mounted.

According to the method for tilting the construction of the present aspect, since the method includes the installation step of mounting, to the construction, the floating member subjected to floating force from water and the tilting step of tilting the construction to which the floating member is mounted, it is possible to prevent the construction from falling immediately after separated from the bottom of water by using floating force that the floating member is subjected to, and the construction can be made self-supporting as a floating object. Accordingly, the tilting speed can be adjusted when the construction is tilted. This allows the construction to be safely tilted. Further, the impact when the construction collides with the water surface can be reduced.

Further, in the method for tilting the construction according to one aspect of the present disclosure, the tilting step includes towing an upper part of the construction to tilt the construction.

According to the method for tilting the construction of the present aspect, since the construction is tilted by towing the upper part of the construction in the tilting step, the tilting speed or the tilting direction can be controlled by the towing direction or the towing force.

Note that it is preferable to perform towing from a plurality of directions.

Further, in the method for tilting the construction according to one aspect of the present disclosure, the construction has a first construction and a second construction installed spaced away from each other, the method includes a connection step of connecting the first construction and the second construction before the tilting step, and the tilting step including tilting the first construction to tilt the second construction in a chain reaction.

According to the method for tilting the construction of the present aspect, the construction has the first construction and the second construction installed spaced away from each other, the method includes the connection step of connecting the first construction and the second construction before the tilting step, and in the tilting step, the first construction is tilted to tilt the second construction in a chain reaction, and thus, by tilting one construction out of a plurality of constructions, it is possible to tilt the remaining construction in a chain reaction.

Further, the first construction and the second construction support each other and thus are prevented from falling immediately after separated from the bottom of water.

Further, the method for tilting the construction according to one aspect of the present disclosure is a method for tilting a construction to tilt a bottom-mounted construction extending upward from a bottom of water, and the method includes: an installation step of mounting a towing member (132) to an upper part of the construction, the towing member being configured to tow the construction; and a tilting step of tilting the construction by towing the construction to which the towing member is mounted.

Further, the method for tilting the construction according to one aspect of the present disclosure includes, before the tilting step, a cutting step of forming a cutting part that divides the construction into a ground side portion of the construction and a portion above the ground side portion of the construction.

Further, the method for tilting the construction according to one aspect of the present disclosure includes, before the tilting step, a cutting step of partially forming a cutting part that divides the construction into a ground side portion of the construction and a portion above the ground side portion of the construction.

Further, the tilting structure (310) according to one aspect of the present disclosure includes a bottom-mounted construction extending upward from a ground; and a resistive member mounted to the construction and subjected to fluid force from a fluid surrounding the construction.

Further, the tilting structure (320) according to one aspect of the present disclosure includes a bottom-mounted construction extending upward from a bottom of water; and a floating member mounted to the construction and subjected to floating force from water.

Further, the tilting structure (330) according to one aspect of the present disclosure includes a bottom-mounted construction extending upward from a ground; and a towing member (132) mounted to an upper part of the construction and configured to tow the construction.

### [List of References]

- 110: resistive member
- 111: pole
- 112: sail body
- 116: vane wheel body
- 117: duct
- 118: pole
- 120: floating member
- 130: winch
- 131: winch body
- 132: wire (towing member)
- 141: wire (connection member)
- 200: construction
- 200a: notch
- 200b: backcut
- 200c: hinge
- 210: foundation
- 220: construction body
- 230: cutting plane
- 310, 320, 330: tilting structure
- 401: ground
- 402: surrounding water
- 403: water surface
- 404: surrounding air
- 500: vessel

## Claims

1. A method for tilting a construction to tilt a bottom-mounted construction (200) extending upward from a ground (401), the method comprising:
an installation step of mounting a resistive member (110) to the construction (200), the resistive member (110) being subjected to fluid force from a fluid surrounding the construction (200); and
a tilting step of tilting the construction (200) to which the resistive member (110) is mounted and putting the construction to be ready to be moved from an installation place,
**characterised in that** the resistive member (110) is a sail (112).

2. The method for tilting the construction according to claim 1, further comprising:
a tilting speed adjustment step of changing the fluid force to which the resistive member (110) is subjected from the fluid so as to adjust a tilting speed of the construction,
wherein, in the tilting speed adjustment step, the tilting speed is adjustable by increasing or decreasing an area of a surface of the sail (112) to be subjected to resistance.

3. A method for tilting a construction to tilt a bottom-mounted construction (200) extending upward from a ground, the method comprising:
an installation step of mounting a resistive member (110) to the construction (200), the resistive member (110) being subjected to fluid force from a fluid surrounding the construction (200); and
a tilting step of tilting the construction to which the resistive member (110) is mounted and putting the construction to be ready to be moved from an installation place,
**characterised in that** the resistive member is a vane wheel (116);
the method further comprising:
a tilting speed adjustment step of changing the fluid force to which the resistive member (110) is subjected from the fluid so as to adjust a tilting speed of the construction,
wherein, in the tilting speed adjustment step, the tilting speed is adjustable by controlling a rotational rate of the vane wheel (116).

4. The method for tilting the construction according to any one of claims 1 to 3,
wherein the construction (200) is an aquatic construction extending from a bottom of water, and
wherein the resistive member (110) is located in surrounding water and/or surrounding air.

5. The method for tilting the construction according to any one of claims 1 to 4, wherein the tilting step includes towing an upper part of the construction (200) to tilt the construction (200).

6. The method for tilting the construction according to any one of claims 1 to 5, wherein the construction (200) has a first construction (200) and a second construction (200) installed spaced away from each other,
the method further comprising:
a connection step of connecting the first construction (200) and the second construction (200) before the tilting step,
wherein the tilting step includes tilting the first construction (200) to tilt the second construction (200) in a chain reaction.

7. The method for tilting the construction according to any one of claims 1 to 6 further comprising, before the tilting step, a cutting step of forming a cutting part (200a, 200b) that divides the construction into a ground side portion of the construction and a portion above the ground side portion of the construction.

8. The method for tilting the construction according to any one of claims 1 to 7, further comprising, before the tilting step, a cutting step of partially forming a cutting part (200a, 200b) that divides the construction into a ground side portion of the construction and a portion above the ground side portion of the construction.

9. The method for tilting the construction according to claim 8,
wherein the cutting part includes a notch (200a) and a backcut (200b), the notch (200a) being formed in a side surface of the construction which is in a direction intended to tilt the construction, and the backcut (200b) being formed toward the notch (200a) from a side surface of the construction on the opposite side from the notch (200a).

10. A tilting structure comprising:
a bottom-mounted construction (200) extending upward from a ground; and
a resistive member (110) mounted to the construction and subjected to fluid force from a fluid surrounding the construction,
**characterised in that** the resistive member is a sail (112), the tilting structure being for an operation to disconnect the construction from the ground and to put the disconnected construction to be ready to be moved from an installation place.

## Patentansprüche

1. Verfahren zum Neigen einer Konstruktion, um eine bodenmontierte Konstruktion (200) zu neigen, die sich von einem Boden (401) nach oben erstreckt, wobei das Verfahren umfasst:
einen Installationsschritt des Montierens eines Widerstandselements (110) an der Konstruktion (200), wobei das Widerstandselement (110) einer Fluidkraft eines die Konstruktion (200) umgebenden Fluids ausgesetzt wird; und
einen Neigeschritt des Neigens der Konstruktion (200), an der das Widerstandselement (110) montiert wird, und des Vorbereitens der Konstruktion dahingehend, von einem Installationsort aus bewegt zu werden,
**dadurch gekennzeichnet, dass** das Widerstandselement (110) ein Segel (112) ist.

2. Verfahren zum Neigen der Konstruktion nach Anspruch 1, ferner umfassend:
einen Neigegeschwindigkeitseinstellschritt des Änderns der Fluidkraft, der das Widerstandselement (110) durch das Fluid ausgesetzt ist, um eine Neigegeschwindigkeit der Konstruktion einzustellen,
wobei, in dem Neigegeschwindigkeitseinstellschritt, die Neigegeschwindigkeit durch Vergrößern oder Verkleinern eines Bereichs bzw. Flächeninhalts einer Fläche des Segels (112), das einem Widerstand auszusetzten ist, einstellbar ist.

3. Verfahren zum Neigen einer Konstruktion, um eine bodenmontierte Konstruktion (200) zu neigen, die sich von einem Boden nach oben erstreckt, wobei das Verfahren umfasst:
einen Installationsschritt des Montierens eines Widerstandselements (110) an der Konstruktion (200), wobei das Widerstandselement (110) einer Fluidkraft eines die Konstruktion (200) umgebenden Fluids ausgesetzt wird; und
einen Neigeschritt des Neigens der Konstruktion, an der das Widerstandselement (110) montiert wird, und des Vorbereitens der Konstruktion dahingehend, von einem Installationsort aus bewegt zu werden,
**dadurch gekennzeichnet, dass** das Widerstandselement (110) ein Flügel- bzw. Schaufelrad (116) ist,
wobei das Verfahren ferner umfasst:
einen Neigegeschwindigkeitseinstellschritt des Änderns der Fluidkraft, der das Widerstandselement (110) durch das Fluid ausgesetzt ist, um eine Neigegeschwindigkeit der Konstruktion einzustellen,
wobei, in dem Neigegeschwindigkeitseinstellschritt, die Neigegeschwindigkeit durch Steuern bzw. Regeln einer Drehzahl des Schaufelrads (116) einstellbar ist.

4. Verfahren zum Neigen der Konstruktion nach einem der Ansprüche 1 bis 3,
wobei die Konstruktion (200) eine aquatische Konstruktion ist, die sich von einem Gewässerboden erstreckt, und
wobei sich das Widerstandselement (110) in umgebendem Wasser und/oder in umgebender Luft befindet.

5. Verfahren zum Neigen der Konstruktion nach einem der Ansprüche 1 bis 4, wobei der Neigeschritt ein Schleppen eines oberen Teils der Konstruktion (200) zum Neigen der Konstruktion (200) beinhaltet.

6. Verfahren zum Neigen der Konstruktion nach einem der Ansprüche 1 bis 5, wobei die Konstruktion (200) eine erste Konstruktion (200) und eine zweite Konstruktion (200) aufweist, die beabstandet zueinander installiert sind, wobei das Verfahren ferner umfasst:
einen Verbindungsschritt des Verbindens der ersten Konstruktion (200) und der zweiten Konstruktion (200) vor dem Neigeschritt,
wobei der Neigeschritt ein Neigen der ersten Konstruktion (200) beinhaltet, um die zweite Konstruktion (200) in einer Kettenreaktion zu neigen.

7. Verfahren zum Neigen der Konstruktion nach einem der Ansprüche 1 bis 6, ferner umfassend, vor dem Neigeschritt, einen Schneideschritt des Bildens eines Schneideteils (200a, 200b), der die Konstruktion in einen bodenseitigen Abschnitt der Konstruktion und einen Abschnitt über dem bodenseitigen Abschnitt der Konstruktion unterteilt.

8. Verfahren zum Neigen der Konstruktion nach einem der Ansprüche 1 bis 7, ferner umfassend, vor dem Neigeschritt, einen Schneideschritt des teilweisen Bildens eines Schneideteils (200a, 200b), der die Konstruktion in einen bodenseitigen Abschnitt der Konstruktion und einen Abschnitt über dem bodenseitigen Abschnitt der Konstruktion unterteilt.

9. Verfahren zum Neigen der Konstruktion nach Anspruch 8,
wobei der Schneideteil eine Kerbe (200a) und einen Hinterschnitt (200b) beinhaltet, wobei die Kerbe (200a) in einer Seitenfläche der Konstruktion gebildet wird, die in einer Richtung ist, die zum Neigen der Konstruktion bestimmt ist, und der Hinterschnitt (200b) zu der Kerbe (200a) hin von einer Seitenfläche der Konstruktion auf der gegenüberliegenden bzw. entgegengesetzten Seite von der Kerbe (200a) gebildet wird.

10. Neigekonstruktion, umfassend:
eine bodenmontierte Konstruktion (200), die sich von einem Boden nach oben erstreckt; und
ein Widerstandselement (110), das an der Konstruktion montiert ist und einer Fluidkraft eines die Konstruktion umgebenden Fluids ausgesetzt ist,
**dadurch gekennzeichnet, dass** das Widerstandselement ein Segel (112) ist, wobei die Neigestruktur für einen Vorgang des Trennens der Konstruktion von dem Boden und zum Vorbereiten der getrennten Konstruktion dahingehend dient, von einem Installationsort aus bewegt zu werden.

## Revendications

1. Méthode pour incliner une construction destinée à incliner une construction (200) montée sur un fond s'étendant vers le haut à partir d'un sol (401), la méthode comprenant :
une étape d'installation consistant à monter un élément résistif (110) sur la construction (200), l'élément résistif (110) étant soumis à une force de fluide provenant d'un fluide entourant la construction (200) ; et
une étape d'inclinaison consistant à incliner la construction (200) sur laquelle l'élément résistif (110) est monté et à rendre la construction prête à être déplacée depuis un lieu d'installation,
**caractérisée en ce que**
l'élément résistif (110) est une voile (112).

2. Méthode pour incliner la construction selon la revendication 1, comprenant en outre :
une étape d'ajustement de vitesse d'inclinaison consistant à changer la force de fluide à laquelle l'élément résistif (110) est soumis par le fluide de manière à ajuster une vitesse d'inclinaison de la construction,
dans laquelle, lors de l'étape d'ajustement de vitesse d'inclinaison, la vitesse d'inclinaison est ajustable en augmentant ou en diminuant une superficie d'une surface de la voile (112) devant être soumise à une résistance.

3. Méthode pour incliner une construction destinée à incliner une construction (200) montée sur un fond s'étendant vers le haut à partir d'un sol, la méthode comprenant :
une étape d'installation consistant à monter un élément résistif (110) sur la construction (200), l'élément résistif (110) étant soumis à une force de fluide provenant d'un fluide entourant la construction (200) ; et
une étape d'inclinaison consistant à incliner la construction sur laquelle l'élément résistif (110) est monté et à rendre la construction prête à être déplacée depuis un lieu d'installation,
**caractérisée en ce que**
l'élément résistif est une roue à aubes (116) ;
la méthode comprenant en outre :
une étape d'ajustement de vitesse d'inclinaison consistant à changer la force de fluide à laquelle l'élément résistif (110) est soumis par le fluide de manière à ajuster une vitesse d'inclinaison de la construction,
dans laquelle, lors de l'étape d'ajustement de vitesse d'inclinaison, la vitesse d'inclinaison est ajustable en régulant une cadence de rotation de la roue à aubes (116).

4. Méthode pour incliner la construction selon l'une quelconque des revendications 1 à 3,
dans laquelle la construction (200) est une construction aquatique s'étendant à partir d'un fond d'eau, et
dans laquelle l'élément résistif (110) est situé dans l'eau environnante et/ou l'air environnant.

5. Méthode pour incliner la construction selon l'une quelconque des revendications 1 à 4, dans laquelle l'étape d'inclinaison comporte la traction d'une partie supérieure de la construction (200) pour incliner la construction (200).

6. Méthode pour incliner la construction selon l'une quelconque des revendications 1 à 5, dans laquelle la construction (200) a une première construction (200) et une seconde construction (200) installées à distance l'une de l'autre,
la méthode comprenant en outre :
une étape de liaison consistant à relier la première construction (200) et la seconde construction (200) avant l'étape d'inclinaison,
dans laquelle l'étape d'inclinaison consiste à incliner la première construction (200) pour incliner la seconde construction (200) dans une réaction en chaîne.

7. Méthode pour incliner la construction selon l'une quelconque des revendications 1 à 6 comprenant en outre, avant l'étape d'inclinaison, une étape de coupe consistant à former une partie de coupe (200a, 200b) qui divise la construction en une portion côté sol de la construction et une portion au-dessus de la portion côté sol de la construction.

8. Méthode pour incliner la construction selon l'une quelconque des revendications 1 à 7, comprenant en outre, avant l'étape d'inclinaison, une étape de coupe consistant à former partiellement une partie de coupe (200a, 200b) qui divise la construction en une portion côté sol de la construction et une portion au-dessus de la portion côté sol de la construction.

9. Méthode pour incliner la construction selon la revendication 8,
dans laquelle la partie de coupe comporte une entaille (200a) et un trait de coupe (200b), l'entaille (200a) étant formée dans une surface latérale de la construction qui est dans une direction destinée à incliner la construction, et le trait de coupe (200b) étant formé vers l'entaille (200a) à partir d'une surface latérale de la construction sur le côté opposé à l'entaille (200a).

10. Structure d'inclinaison comprenant :
une construction (200) montée sur un fond s'étendant vers le haut à partir d'un sol ; et
un élément résistif (110) monté sur la construction et soumis à une force de fluide provenant d'un fluide entourant la construction,
**caractérisée en ce que**
l'élément résistif est une voile (112), la structure d'inclinaison étant destinée à une opération pour séparer la construction du sol et pour rendre la construction séparée prête à être déplacée depuis un lieu d'installation.
